# EUROPEAN PATENT APPLICATION

(11) **EP 2 590 252 A2**
(43) Date of publication of application: **08.05.2013**
(21) Application number: 12190964.2
(22) Date of filing: 01.11.2012
(51) Int. Cl.: H01M 10/04, H01M 10/34

(54) **Rechargeable battery and method for manufacturing the same**

(30) Priority: 04.11.2011 KR 20110114623
(71) Applicant: Samsung SDI Co., Ltd., Gyeonggi-do (KR); Robert Bosch GmbH, 70442 Stuttgart (DE)
(72) Inventor: Kim, Joong-Heon, Yongin-si (KR); Lee, Chi-Young, Yongin-si (KR); Haam, Jeong-Wan, Yongin-si (KR); Moon, Jong-Seok, Yongin-si (KR)
(74) Representative: Gulde Hengelhaupt Ziebig & Schneider

(57) **Abstract**

The invention relates to a rechargeable battery (101) and to a method for manufacturing the same.

In order to improve efficiency of charging and discharging of the rechargeable battery (101), the invention provides that an internal pressure of a case (21) of the rechargeable battery (101) is lower than ambient pressure and that a negative relative pressure is formed in the case (21) when manufacturing the battery (101).

## Description

### BACKGROUND

### 1. Field

The invention relates to a rechargeable battery and a method for manufacturing the same.

### 2. Description of Related Art

Unlike a primary battery that is not designed to be recharged, a rechargeable battery can be repeatedly charged and discharged. A small-capacity rechargeable battery has been used for a small electronic device such as a mobile phone, a laptop computer, and a camcorder, and a large-capacity rechargeable battery has been used as a power source for driving a motor of a hybrid electric vehicle or an electric vehicle.

Lately, a high power rechargeable battery has been introduced. The high power rechargeable battery may use a high energy density non-aqueous electrolyte. The high power rechargeable battery includes a plurality of rechargeable batteries cells or modules coupled in series or parallel. Such a high power rechargeable battery has been used for an apparatus requiring high power, for example, for driving a motor of a hybrid electric vehicle or an electric vehicle.

Furthermore, one large capacity rechargeable battery may be formed of a plurality of rechargeable batteries cells or modules coupled in series or parallel. The rechargeable battery may be formed in a cylindrical or a rectangular shape (e.g., a square shape).

The rechargeable battery includes an electrode assembly having a positive electrode and a negative electrode. When a gap between the positive electrode and the negative electrode is wide, a migration distance of ions becomes longer. Accordingly, the efficiency of charge and discharge may become deteriorated.

At an initial stage, a predetermined pressure is applied in order to closely arrange rechargeable batteries. When the predetermined pressure is applied, an internal pressure of a rechargeable battery is also increased. As a result, a cycle-life of a rechargeable battery may be deteriorated.

### SUMMARY

The invention has been made in an effort to provide a rechargeable battery having improved efficiency of charging and discharging.

An exemplary embodiment provides a rechargeable battery. The rechargeable battery includes an electrode assembly including a positive electrode and a negative electrode, a case housing the electrode assembly, and a terminal electrically coupled to the electrode assembly and protruding to an outside of the case. According to the invention, an internal pressure of the case is lower than an ambient, e.g. atmospheric pressure.

A difference between the internal pressure of the case and the atmospheric pressure may be greater than about 45kPa. The electrode assembly may have a curved outer surface, and the curved outer surface may be concave toward an inside of the electrode assembly in a thickness direction of the electrode assembly.

A distance between the positive electrode and the negative electrode at a center part in a height direction of the electrode assembly may be less than distances between the positive electrode and the negative electrode at both ends in the height direction of the electrode assembly. A distance between the positive electrode and the negative electrode may gradually decrease as a center part of the electrode assembly is approached from the both ends parallel to and in particular in the height direction of the electrode assembly.

An outer side of the electrode assembly at a center part in a height direction of the electrode assembly may be separated from a tangent line in the height direction from a surface near a top end of the electrode assembly to a surface near a bottom end of the electrode assembly, and may be disposed toward the center of the electrode assembly. In other words, at the center part, the electrode assembly may be separated from or arranged at a distance to a line, in particular a straight line, the line connecting a top and a bottom end of the electrode assembly with each other in the hight direction. A distance from the outer side of the electrode assembly to the tangent or straight line may gradually increase as a center is approached parallel to and in particular in the height direction from the top end and the bottom end.

The sealing cap of the reachargeable battery may comprise a column member in an electrolyte injection opening and a flange member at a top end of the column member and in a first groove on the electrolyte injection opening.

A guiding member may be arranged at a bottom end of the column meber, the guiding member having a cross-section that is reduced or decreases as the bottom end of the column member is approached, hence towardas the bottom end of the column member.

A second groove may be arranged on the first groove, the second groove may be wider than the first groove, a sealing cover may be in the second groove, and the sealing cover may be fixed at a cap plate through welding. In other words, the first groove may extend in the second groove.

Another aspect of the invention may provide a method for manufacturing a rechargeable battery. The method may include arrangeing an electrode assembly in a battery case, injecting an electrolyte solution into the case that houses an electrode assembly and forming a negative pressure inside the case. In particular, the electrolyte is injected through an electrolyte injection opening in a cap plate coupled to the case. Furthermore, the method may comprise disposing a sealing cap at the electrolyte injection opening. The negative pressure inside the case is preferably formed by discharging gas from the case through the electrolyte injection opening using a negative pressure forming member that is disposed at the cap plate, and inserting the sealing cap in the electrolyte injection opening and installing the sealing cap at the electrolyte injection opening by pressing the sealing cap using the negative pressure forming member after the negative pressure forming member is coupled to the cap plate.

In forming the negative pressure, a difference between an internal pressure of the case and an ambient or atmospheric pressure may be greater than about 45kPa. In the forming the negative pressure, the negative pressure forming member may be pipe-shaped and may surround a periphery of the electrolyte injection opening from an outer side of the electrolyte injection opening, and gas may be discharged from the case.

According to an exemplary embodiment, a negative pressure is formed inside the case. Due to the inner pressure, a gap between the positive electrode and the negative electrode may be reduced, thereby improving charging and discharging efficiency.

The invention is described hereinafter, in more detail and in an exemplary manner using advantageous embodiments and with reference to the schematic drawings and exemplary photographs. The described embodiments are only possible configurations in which, however, the individual features as described above can be provided independent of one another and can be omitted in the drawings.

### BRIEF DESCRIPTION OF THE DRAWINGS

FIG. 1 is a perspective view that illustrates a rechargeable battery in accordance with a first exemplary embodiment of the present invention.
FIG. 2 is a cross-sectional view of FIG. 1 taken along the line II-II.
FIG. 3 is a cross-sectional view of FIG. 1, taken along the line III-III.
FIG. 4A illustrates forming a negative pressure inside a case, and FIG. 4B illustrates installing a sealing cap at an electrolyte injection opening.
FIG. 5 is a graph showing changes in a thickness of an electrode assembly according to an internal pressure of a case.
FIG. 6 is a graph that compares charging and discharging amounts between a typical rechargeable battery and a rechargeable battery according to the first exemplary embodiment of the present invention.
FIG. 7A is a photograph illustrating an inside of a typical rechargeable battery, and FIG. 7B is a photograph illustrating an inside of a rechargeable battery in accordance with the present exemplary embodiment.
FIG. 8 is a graph that shows a pressure applied to a rectangular rechargeable battery.
FIG. 9A illustrates forming a negative pressure inside a case of a rechargeable battery in accordance with a second exemplary embodiment of the present invention.
FIG. 9B illustrates disposing a sealing cap at an electrolyte injection opening of a rechargeable battery in accordance with the second exemplary embodiment of the present invention.
FIG. 9C illustrates a sealing cover disposed at the electrolyte injection opening of a rechargeable battery in accordance with the second exemplary embodiment of the present invention.

### DETAILED DESCRIPTION

In the following detailed description, only certain exemplary embodiments of the present invention are shown and described, simply by way of illustration. As those skilled in the art would realize, the described embodiments may be modified in various different ways, all without departing from the scope of the present invention. Like reference numerals designate like elements throughout the specification.

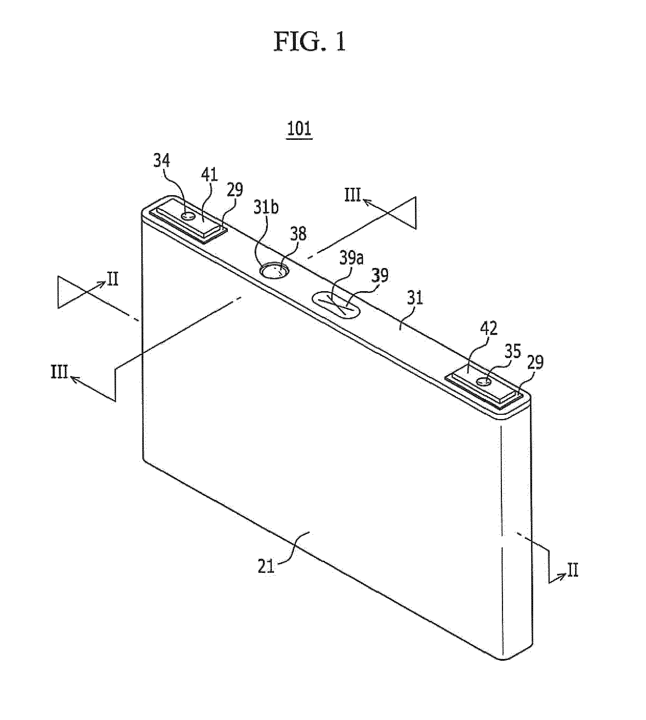

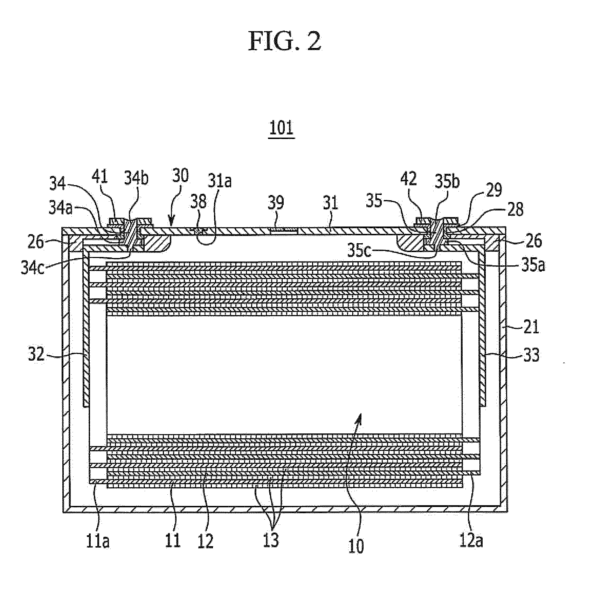

FIG. 1 is a perspective view that illustrates a rechargeable battery in accordance with a first exemplary embodiment of the present invention, and FIG. 2 is a cross-sectional view of FIG. 1 taken along the line II-II.

Referring to FIG. 1 and FIG. 2, a rechargeable battery 101 in accordance with the first exemplary embodiment may include an electrode assembly 10, a case 21 internally housing the electrode assembly 10, and a cap assembly 30 coupled at an opening of the case 21. The electrode assembly 10 may include a positive electrode 11 and a negative electrode 12, which are spiral wound with a separator 13 there between.

For example, the rechargeable battery 101 in accordance with the first exemplary embodiment may be a lithium ion secondary battery formed in a rectangular shape. However, the present invention is not limited thereto. Embodiments of the present invention may be applied to various batteries such as a lithium polymer battery and a cylindrical battery.

The positive electrode 11 and the negative electrode 12 may include an uncoated region 11a and an uncoated region 12a, respectively. The coated regions of the positive and negative electrodes 11 and 12 may be a region of a current collector, which is coated with an active material. Here, the current collector may be formed of a thin plate metal foil. The uncoated regions 11a and 12a may be a region of the current collector, which is not coated with an active material.

The uncoated region 11a of the positive electrode 11 may be formed at one end of the positive electrode 11 and extend along a length direction of the positive electrode 11. The uncoated region 12a of the negative electrode 12 may be formed at the other end of the negative electrode 12 and extend along a length direction of the negative electrode 12. The positive electrode 11 and the negative electrode 12 may be spiral-wound with the separator 13 positioned there between. The separator 13 may be an insulator.

The present invention, however, is not limited to the structure described above. The electrode assembly 10 may be formed as a stacking structure by stacking a positive electrode and a negative electrode, which are formed of a plurality of sheets, with a separator positioned there between.

The case 21 may be formed of metal and may generally have a hexahedral shape. The case 21 may comprise the opening at one side thereof. The cap assembly 30 may comprise a cap plate 31 coupled at the opening of the case 21, a positive electrode terminal 41 protruding toward the outside of the cap plate 31 and electrically connected to the positive electrode 11, a negative electrode terminal 42 protruding toward the outside of the cap plate 31 and electrically connected to the negative electrode 12, and a vent member 39 having a notch 39a that can be broken by an internal pressure (e.g., a predetermined internal pressure).

The cap plate 31 may be formed of a thin plate. The cap plate 31 may include an electrolyte injection opening 31a for injecting electrolyte solution and a sealing cap 38 for sealing the electrolyte injection opening 31a. The electrolyte injection opening 31a may be formed at one side of the cap plate 31 and the sealing cap 38 may be fixedly installed at the cap plate 31.

A positive current collecting tap 32 may have a lower part connected to the positive electrode uncoated region 11a through welding and an upper part fixed at the positive electrode terminal column 34 through welding. A lower insulating member 26 may be disposed under the cap plate 31 in order to insert the positive electrode terminal column 34 and the positive current collecting tap 32.

A flange member 34a may be formed at one end of the positive electrode terminal column 34. The flange member 34a may contact the positive current collecting tap 32. A column member 34b may be formed at the other end of the positive electrode terminal column 34 and inserted at the positive electrode terminal 41. A protrusion 34c may be formed at a bottom of the flange member 34a. The protrusion 34c may be inserted at the positive current collecting tap 32 and fixed through welding.

The top and bottom of the positive electrode terminal column 34 may be pressed (and/or compressed / deformed) after being inserted through the cap plate 31 and the positive electrode terminal 41. Accordingly, the positive electrode terminal column 34 may be fixed at the cap plate 31 and the positive electrode terminal 41, e.g. in a rivet like manner. Particularly, the top of the positive electrode terminal column 34 is pressed (and/or compressed / deformed) and spread out on a surface of the positive electrode terminal 41. Accordingly, the positive electrode terminal column 34 may be fixed at the positive electrode terminal 41, e.g. in a rivet like manner.

A first gasket 28 may be disposed between the positive electrode terminal column 34 and the cap plate 31 for insulation. A second gasket 29 may be disposed between the positive electrode terminal 41 and the cap plate 31 for insulation.

The negative current collecting tap 33 may have a lower part connected to the negative electrode uncoated region 12a through welding and an upper part fixed at a negative electrode terminal column 35 through welding. Another lower insulating member 26 may be disposed in the case 21 under the cap plate 31. The negative electrode terminal column 35 and a negative current collecting tap 33 may be inserted in the lower insulating member 26.

A flange member 35a may be formed at one end of the negative electrode terminal column 35. The flange member 35a may contact the negative electrode current collecting tap 33. A column member 35b may be formed at the other end of the negative electrode terminal column 35 and inserted at the negative electrode terminal 42. A protrusion 35c may be formed at a bottom of the flange member 35a. The protrusion 35c may be inserted at the negative current collecting tap 33 and fixed through welding.

The top and bottom of the negative electrode terminal column 35 may be pressed (and/or compressed / deformed) after being inserted through the cap plate 31 and the negative terminal 42. Accordingly, the negative electrode terminal column 35 may be fixed at the cap plate 31 and the negative terminal 42, e.g. in a rivet like manner. Particularly, the top of the negative electrode terminal column 35 may be pressed (and/or compressed / deformed) and extended outwardly. Accordingly, the negative electrode terminal column 35 may be fixed at the negative electrode terminal 42, e.g. in a rivet like manner.

Another first gasket 28 may be disposed between the negative electrode terminal column 35 and the cap plate 31 for insulation. Another second gasket 29 may be disposed between the positive electrode terminal 41 and the cap plate 31 for insulation.

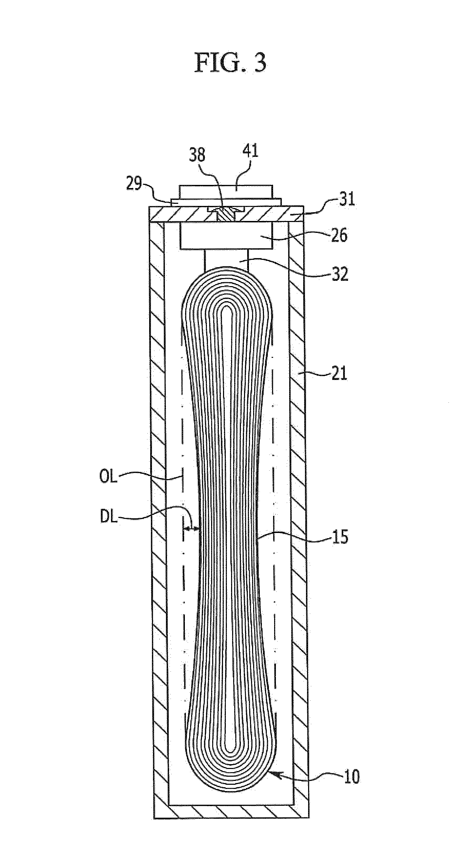

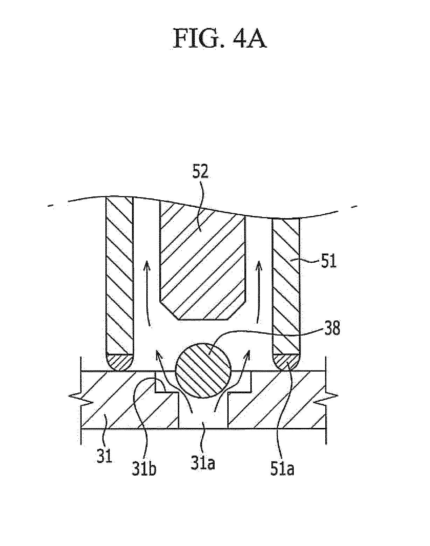

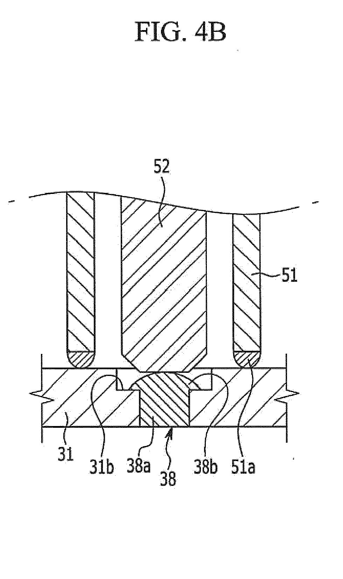

FIG. 3 is a cross-sectional view of FIG. 1 taken along the line III-III. FIG. 4A illustrates forming a negative pressure inside a case. FIG. 4B illustrates disposing a sealing cap at an electrolyte injection opening.

Referring to FIGs. 3, 4A and 4B, the cap plate 31 may include the electrolyte injection opening 31a for injecting electrolyte solution. The electrolyte injection opening 31a may penetrate the cap plate 31 and a groove 31b may be formed at an upper part of the electrolyte injection opening 31a. The groove 31b may have a cross-section wider than that of the electrolyte injection opening 31a.

A ball shaped sealing cap 38 may be inserted and disposed in the groove 31b and a pipe-shaped negative pressure forming member 51 is disposed at the outside of the electrolyte injection opening 31a and surrounds a periphery (e.g., a circumference) of the electrolyte injection opening 31a. A pressing member 52 may be disposed inside the negative pressure forming member 51. The pressing member 52 may be used to press (and/or compress) the sealing cap 38. Since the pressing member 52 is disposed inside the negative pressure forming member 51, the negative pressure forming member 51 draws in gas and the pressing member 52 concurrently inserts (e.g., by exerting pressure) the sealing cap 38 into the electrolyte injection opening 31a. Accordingly, the negative pressure forming member 51 can form negative pressure inside the case 21.

When the negative pressure forming member 51 draws in gas from inside the case 21, an internal pressure of the case 21 becomes a negative pressure that is lower than the atmospheric pressure. Here, the difference between the atmospheric pressure and the internal pressure of the case 21 may be greater than about 45kPa. The negative pressure forming member 51 may be formed in a pipe shape, the sealing member 51a may be disposed at a lower end of the negative pressure forming member 51, and the sealing member 51a may be elastically deformable or even deformed. The negative pressure forming member 51 may be connected to a vacuum pump for discharging (or extracting) gas from inside the case 21.

In accordance with the first exemplary embodiment of the present invention, a method of manufacturing the rechargeable battery 101 may include injecting electrolyte solution inside the case 21 for internally housing the electrode assembly 10; disposing the sealing cap 38 at the electrolyte injection opening 31a; forming a negative pressure by drawing in (or extracting) gas from inside the case 21 using the negative pressure forming member 51 connected to a cap plate; and inserting and disposing the sealing cap 38 inside the electrolyte injection opening 31a by pressing (e.g., exerting pressure on) the sealing cap 38 installed inside the negative pressure forming member 51.

In forming the negative pressure, gas inside the case 21 is drawn in (and exhausted or vaccumed off from inside of the case 21) through the electrolyte injection opening 31a after disposing the pipe shaped negative pressure forming member 51 on the cap plate 31 to surround the periphery (e.g., circumference) of the electrolyte injection opening 31a. In forming the negative pressure, the gas inside the case 21 may be discharged (e.g., exhausted, vacuumed off or released) to make a difference between the internal pressure of the case 21 and the atmospheric pressure up to or higher than about 45kPa.

When inserting and installing a sealing cap 38, the sealing cap 38 is pressed while gas is being released using the negative pressure forming member 51 coupled to the cap plate 31.

The pressing member 52 presses (and/or compresses) and inserts the sealing cap 38 into the electrolyte injection opening 31a after the negative pressure forming member 51 forms the negative pressure inside the case 21. Accordingly, the negative pressure may be formed inside the case 21 while installing the sealing cap 38.

Also, the sealing cap 38 is compressed or deformed as the pressurizing member 52 exerts pressure on the sealing cap 38. The sealing cap 38 may have a sealing rod 38a inserted into the electrolyte injection opening 31a and a head member 38b formed at an upper part of the sealing cap 38. The head member 38b may have a cross-section wider than the sealing rod 38a and be inserted into a groove 31b formed on, above or over the electrolyte injection opening 31a. The sealing cap 38 may be made of metal or a polymer material, but the present invention is not limited thereto.

In accordance with the present exemplary embodiment, as shown in FIG. 3, the electrode assembly 10 may be pressed or/or compressed. Outer sides of the electrode assembly 10 may be concaved inwardly in a thickness direction. Accordingly, the electrode assembly 10 may include a curved member or section (e.g., curvature or a curved surface) 15 at the outer side thereof. When the rechargeable battery 101 is placed in an upright orientation, the terminals 41 and 42 are located at the top of the rechargeable battery 101, and an outer side of the electrode assembly 10 and in particular its curved member or section 15 may be separated from a line (OL) connecting a top end and a bottom end of the electrode assembly 10, in particular at a center part of the electrode assembly 10 in a height direction and disposed toward a center part of the electrode assembly 10 in a width direction. The outer side of the electrode assembly 10 may be separated from the line OL by a certain distance DL. Particularly, a distance DL between the outer side of the electrode assembly 10 and the OL line may gradually increase as it approaches from a top or a bottom of the electrode assembly 10 to a center of the electrode assembly 10 in a height direction. Here, the OL line is a line connecting the top of the electrode assembly 10 and the bottom of the electrode assembly 10. In other words, an outer side (or outer surface) of the electrode assembly 10 at a center part in a height direction of the electrode assembly is separated from a tangent line OL in the height direction from a surface near a top end of the electrode assembly 10 to a surface near a bottom end of the electrode assembly 10, and is disposed toward the center of the electrode assembly from the line by the distance DL.

When the rechargeable battery 101 is placed in an upright orientation so the terminals 41 and 42 are located at the top of the rechargeable battery 101, a gap between the positive electrode 11 and the negative electrode 12 at a center part of the electrode assembly 10 in a height direction may be less than a gap between the positive electrode 11 and the negative electrode 12 at both ends of the electrode assembly 10 in a height direction. For example, a gap between the positive electrode 11 and the negative electrode 12 may become gradually reduced as it approaches from the both ends of the electrode assembly 10 toward the center of the electrode assembly 10 in a height direction.

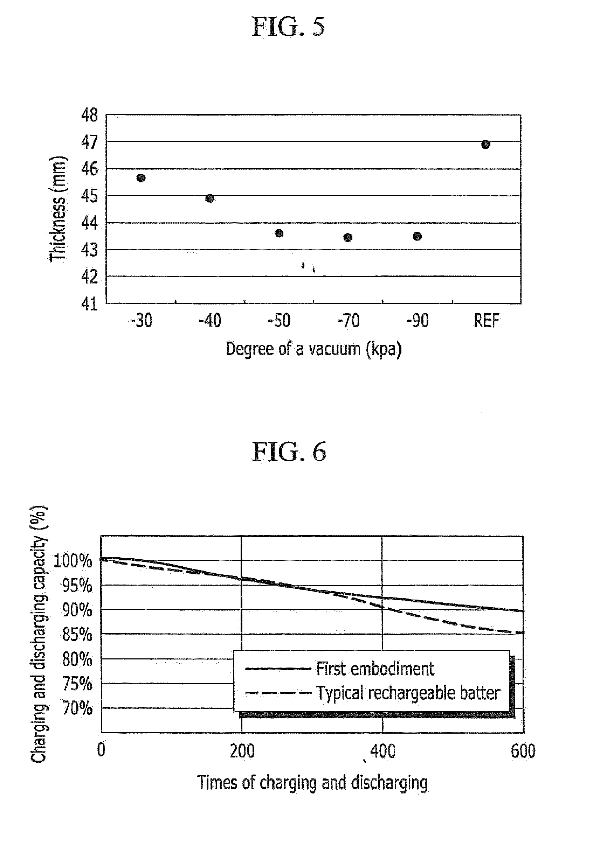

FIG. 5 is a graph showing changes in a thickness of an electrode assembly 10 according to an internal pressure of a case 21. As shown, the thickness of the electrode assembly 10 is significantly reduced when the difference between the internal pressure of the case 21 and the atmospheric pressure is greater than about 45kPa. The graph of FIG. 5 shows results of experiment that is performed using a jelly-roll type rectangular rechargeable battery having a capacity of about 63Ah.

It is desirable to increase or maximize the difference between the negative pressure of the case 21 and the atmospheric pressure as long as the case 21 is capable of enduring or withstanding the negative pressure applied to the case 21. Accordingly, an upper limit of the difference between the negative pressure inside the case 21 and the atmospheric pressure is not defined herein.

When a gap between the positive electrode 11 and the negative electrode 12 is relatively wide, a migration length of ions becomes relatively longer. Accordingly, charging and discharging efficiency may become deteriorated. In order to solve such a problem, a spacer supporting or compressing the electrode assembly 10 may be disposed between the case 21 and the electrode assembly 10. In this case, an overall weight of a corresponding battery may be increased and it may cause a swelling problem. When the electrode assembly 10 expands due to the swelling problem, the spacer may press the electrode assembly 10. As a result, deterioration may quickly progress and a cycle-life (e.g., a life time of the battery) may be shortened. In accordance with the present exemplary embodiment, a negative pressure that is lower than the atmospheric pressure may be formed as the internal pressure of the case 21. Accordingly, a gap between the positive electrode 11 and the negative electrode 12 may be reduced without implementing an additional spacer.

Furthermore, gas may be generated inside the rechargeable battery 101 due to decomposition of electrolyte solution while the rechargeable battery 101 is repeatedly charged and discharged. Such gas generation may increase the internal pressure of the rechargeable battery 101. In this case, the electrode assembly 10 expands and charging and discharging efficiency may become deteriorated. As a result, the cycle-life of the electrode assembly 10 may be shortened. In accordance with the present exemplary embodiment, the internal pressure of the case 21 may be initially formed as a negative pressure. Accordingly, the cycle-life (e.g., a life time) of the rechargeable battery 101 may be improved.

FIG. 6 is a graph showing that a speed of reduction in cycle-life (e.g., a life time) of the rechargeable battery according to the present exemplary embodiment is significantly lower than that of a typical rechargeable battery based on 600 cycles.

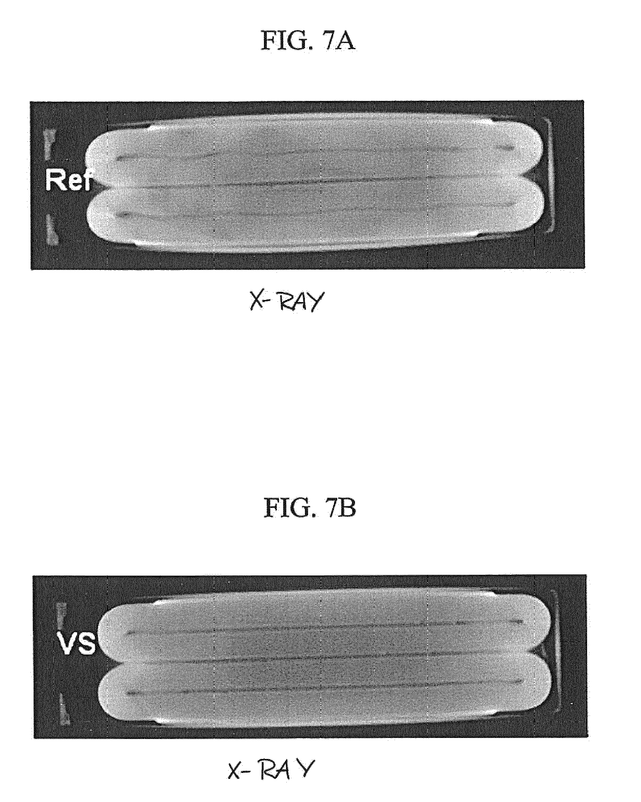

FIG. 7A is a photograph that shows an inside of a typical rechargeable battery. FIG. 7B is a photograph that shows an inside of a rechargeable battery in accordance with the present exemplary embodiment.

As shown in FIG. 7A and FIG. 7B, an interfacing surface of a center part of the electrode assembly 10 in a width direction may be prevented from bending or being wavy because the rechargeable battery 101 according to the present exemplary embodiment forms a negative pressure inside the case 21. Accordingly, the interfacing surface may not become non-uniform. When the interfacing surface is non-uniform, the migration distance of ions becomes comparatively (or relatively) longer. Accordingly, charging and discharging efficiency may be deteriorated. Such a problem may be prevented in accordance with the present exemplary embodiment. In order to prevent the interfacing surface from being non-uniform and e.g. wavy, a core may be inserted at a center of the electrode assembly 10. When the core is inserted at the center of the electrode assembly 10, the weight of the rechargeable battery 101 is increased. Furthermore, a part of the electrode assembly 10, which contacts the core when the electrode assembly 10 expands, may become quickly deteriorated.

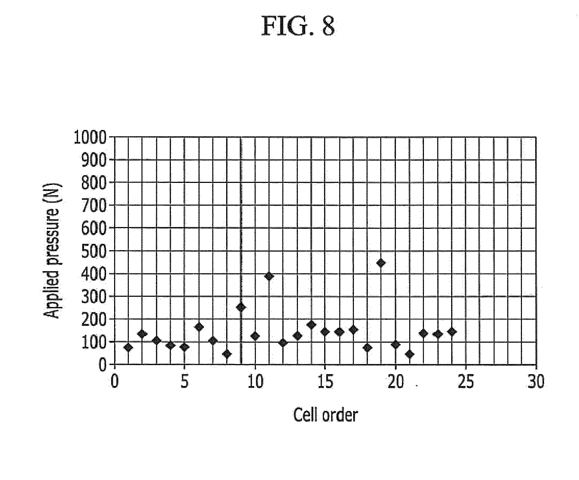

Since typical rechargeable batteries are formed to have a convex part at a center thereof, a predetermined pressure is applied in order to closely attach rechargeable batteries. For example, a maximum pressure force of about 45,000 N may be applied to the rechargeable batteries. As shown in FIG. 8, since the maximum pressure force applied to the rechargeable battery 101 does not exceed about 500 N in accordance with the present exemplary embodiment, the pressure force applied to the rechargeable battery 101 may be significantly reduced compared to that applied to a typical rechargeable battery.

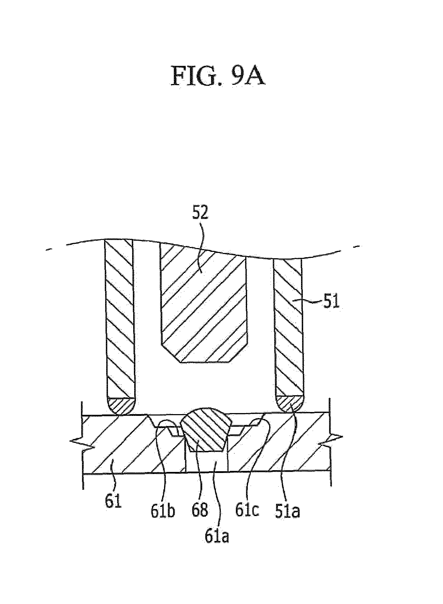

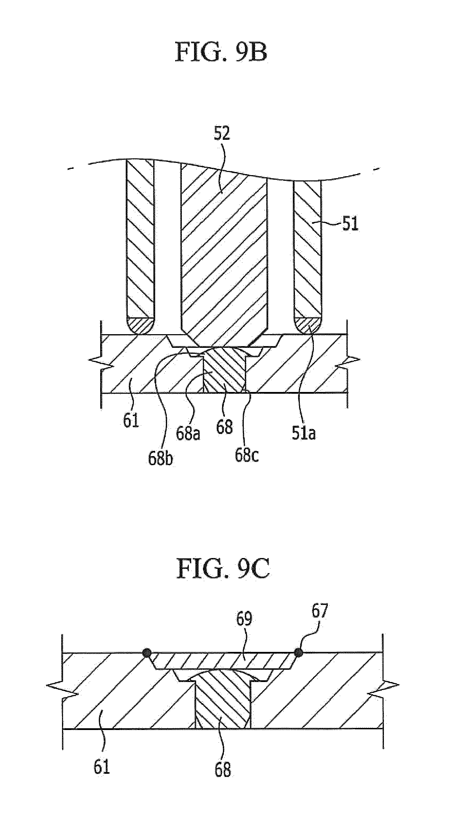

FIG. 9A illustrates forming a negative pressure inside a case of a rechargeable battery in accordance with a second exemplary embodiment of the present invention. FIG. 9B illustrates disposing a sealing cap at an electrolyte injection opening of a rechargeable battery in accordance with the second exemplary embodiment of the present invention.

FIG. 9C illustrates a sealing cap disposed at an electrolyte injection opening of a rechargeable battery in accordance with the second exemplary embodiment of the present invention.

The rechargeable battery in accordance with the second exemplary embodiment may have a substantially similar configuration as the first exemplary embodiment, except for an electrolyte injection opening and a sealing cap. Accordingly, the detailed descriptions of similar elements may be omitted.

As shown in FIG. 9A, an electrolyte injection opening 61a may be formed in a cap plate 61. A first groove 61b may be formed on the electrolyte injection opening 61a. The first groove 61b may have a cross-section wider than that of the electrolyte injection opening 61a. Furthermore, a second groove 61c may be formed on the first groove 61b. The second groove 61c may have a cross-section wider than that of the first groove 61b.

A sealing cap 68 may have a shape of a truncated circular cone that has a top surface bent in a spherical shape. Accordingly, the sealing cap 68 may have a transverse section that becomes reduced in diameter as it approaches a lower end.

The pipe-shaped negative pressure forming member 51 may be disposed to surround a periphery (e.g., circumference) of the electrolyte injection opening 61a from an outer side of the second groove 61c with the sealing cap 68 partially inserted into the electrolyte injection opening 61a.

The pressing member 52 pressing (applying or exerting pressure on) the sealing cap 68 may be disposed inside the negative pressure forming member 51.

When gas is drawn in (and thereby discharged, vacuumed off or released from the inside of the case 21 using the negative pressure forming member 51, a negative pressure that is lower than the atmospheric pressure may be formed inside the case 21. The negative pressure forming member 51 may be formed in a pipe shape. A sealing member having an elastic power, hence being elastically deformable, may be disposed at a lower end of the negative pressure forming member 51. The negative pressure forming member 51 may be connected to a vacuum pump in order to discharge (or exhaust) gas from the inside of the case 21.

As shown in FIG. 9B, the pressing member 52 may press (and/or compress) and push the sealing cap 68 into the electrolyte injection opening 61a after the negative pressure forming member 51 forms the negative pressure inside the case. Accordingly, the sealing cap 68 may be deformed. The sealing cap 68 may include a sealing rod 68a inserted into the electrolyte injection opening 61a, a head member 68b formed at an upper end of the sealing rod 68a, and a guiding member 68c formed at a lower end of the sealing rod 68a. The guiding member 68c may have a cross-section that is reduced, e.g. conically, as the lower end is approached. Due to the guiding member 68c of the sealing cap 68 in accordance with the present exemplary embodiment, the sealing cap 68 may be more easily inserted into the electrolyte injection opening 61a. In case of using a ball-shaped sealing cap to seal the electrolyte injection opening 61a, the ball-shaped sealing cap may be not stably inserted into the electrolyte injection opening 61a when a direction of applying pressure is improper. In accordance with the present exemplary embodiment, a pressure is applied after the guiding member 68c is inserted into the electrolyte injection opening 61a. Accordingly, the electrolyte injection opening 61a may be more stably sealed.

As shown in FIG. 9C, a sealing cover 69, formed in a plate shape, may be inserted and disposed at the second groove 61c after the sealing cap 68 is disposed. The sealing cover 69 may be fixed at the cap plate 61 through welding. Accordingly, a welding member 67 may be formed on a top surface where the sealing cover 69 meets the cap plate 61. The sealing cover 69 may be fixed through welding at a corner where an upper end of the second groove 61c meets a top surface of the cap plate 61.

Accordingly, the electrolyte injection opening 61a may be more stably sealed because the electrolyte injection opening 61a may be sealed doubly. When electrolyte solution is injected, surroundings of the electrolyte injection opening 61a may be contaminated. Thus, the top surface of the first groove 61b may be contaminated. However, the second groove 61c may be not contaminated because the second groove 61c is formed higher and wider than the first groove 61b. Accordingly, it may prevent sealing performance from being deteriorated which may be caused by perform welding at a contaminated region.

## Claims

1. A rechargeable battery (101) comprising:
an electrode assembly (10) comprising a positive electrode (11) and a negative electrode (12);
a case (21) housing the electrode assembly (10); and
a terminal (41, 42) electrically coupled to the electrode assembly (10) and protruding to an outside of the case (21),
wherein an internal pressure of the case (21) is lower than an atmospheric pressure.

2. The rechargeable battery (101) of claim 1, wherein a difference between the internal pressure of the case (21) and the atmospheric pressure is greater than about 45kPa.

3. The rechargeable battery (101) of claim 1 or 2, wherein the electrode assembly (10) has a curved outer surface (15), and the curved outer surface (15) is concave toward an inside of the electrode assembly (10) in a thickness direction of the electrode assembly (10).

4. The rechargeable battery(101) of any of claims 1 to 3, wherein a distance between the positive electrode (11) and the negative electrode (12) at a center part in a height direction of the electrode assembly (10) is less than distances between the positive electrode (11) and the negative electrode (12) at both ends in the height direction of the electrode assembly (10).

5. The rechargeable battery (101) of any of claims 1 to 4, wherein a distance between the positive electrode and the negative electrode is gradually reduced as a center part of the electrode assembly is approached from both ends parallel to the height direction of the electrode assembly.

6. The rechargeable battery (101) of any of claims 1 to 5, wherein an outer side of the electrode assembly (10) at a center part in a height direction of the electrode assembly (10) is separated from a tangent line (OL) in the height direction from a surface near a top end of the electrode assembly (10) to a surface near a bottom end of the electrode assembly (10), and is disposed toward the center of the electrode assembly (10).

7. The rechargeable battery (101) of claim 6, wherein a distance from the outer side of the electrode assembly (10) to the tangent line (OL) gradually increases as a center is approached parallel to the height direction from the top end and the bottom end.

8. The rechargeable battery (101) of any of claims 1 of 7, wherein a sealing cap (38) of the reachargeable battery (101) comprises a column member (34b) in an electrolyte injection opening (31a) and a flange member (34a) at a top end of the column member (34b) and in a first groove (31b) on the electrolyte injection opening (31a).

9. The rechargeable battery (101) of claim 8, wherein a guiding member (68c) is at a bottom end of the column member (34b), and the guiding member (68c) has a cross-section that is reduced as the bottom end of the column member (34b) is approached.

10. The rechargeable battery (101) of claim 8 or 9, wherein a second groove (61c) is on the first groove (61b), the second groove (61c) is wider than the first groove (61b), a sealing cover (69) is in the second groove (61c), and the sealing cover (69) is fixed at a cap plate (61) through welding.

11. A method for manufacturing a rechargeable battery (101), the method comprising:
arranging an electrode assembly (10) in a case (21);
injecting an electrolyte solution into the case (21) and
forming a negative pressure inside the case (21).

12. The method of claim 11, the method comprising injecting the electrolyte salutation through an electrolyte injection opening (31a) in a cap plate (31) coupled to the case (21);
disposing a sealing cap (38) at the electrolyte injection opening (31a);
forming the negative pressure.

13. The method of claim 12, the method comprising forming the negative pressure inside the case (21) by discharging gas from the case (21) through the electrolyte injection opening (31a) using a negative pressure forming member (51) that is disposed at the cap plate (11); and
inserting the sealing cap (38) in the electrolyte injection opening (31a) and installing the sealing cap (38) at the electrolyte injection opening (31a) by pressing the sealing cap (38) using the negative pressure forming member (51) after the negative pressure forming member (51) is coupled to the cap plate (21).

14. The method of any of claims 11 to 13, wherein in the forming the negative pressure, a difference between an internal pressure of the case (21) and an atmospheric pressure is greater than about 45kPa.

15. The method of claims 13 or 14, wherein in the forming the negative pressure, the negative pressure forming member (51) is pipe-shaped and surrounds a periphery of the electrolyte injection opening (31a) from an outer side of the electrolyte injection opening (31a), and gas is discharged from the case (21).
